# EUROPEAN PATENT APPLICATION

(11) **EP 4 657 943 A1**
(43) Date of publication of application: **03.12.2025**
(21) Application number: 24756020.4
(22) Date of filing: 01.02.2024
(51) Int. Cl.: H04W 72/0446

(54) **COMMUNICATION METHOD, APPARATUS AND SYSTEM**

(30) Priority: 17.02.2023 CN 202310167229
(71) Applicant: Huawei Technologies Co., Ltd., Shenzhen, Guangdong 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN); HOU, Hailong, Shenzhen, Guangdong 518129 (CN)
(74) Representative: Pfenning, Meinig & Partner mbB
(86) International application number: PCT/CN2024/075321
(87) International publication number: WO 2024/169646

(57) **Abstract**

This application provides a communication method, apparatus, and system; and relates to the field of wireless communication, and in particular, to cross-link interference measurement in a wireless communication system, to reduce impact on communication performance of a cell edge terminal device during cross-link interference measurement, and improve communication efficiency. The method may include: receiving first signaling and second signaling, where the first signaling indicates to send a first signal on a first resource, the second signaling indicates a second resource that is not used for uplink transmission, the second resource overlaps with the first resource in time domain, the second resource includes a plurality of resource elements REs in one resource block RB, and the plurality of REs are resource elements REs with indexes of nN+k, where n is an integer greater than or equal to 0 and less than or equal to 12/N-1, k indicates N-1 different integers from 0 to N-1, and N is a positive integer; and sending the first signal on a third resource, where the third resource is determined based on the first resource and the second resource.

## Description

This application claims priority to Chinese Patent Application No. 202310167229.3, filed with the China National Intellectual Property Administration on February 17, 2023 and entitled "COMMUNICATION METHOD, APPARATUS, AND SYSTEM", which is incorporated herein by reference in its entirety.

### TECHNICAL FIELD

Embodiments of this application relate to the communication field, and more specifically, to a communication method, apparatus, and system.

### BACKGROUND

Time division duplex (Time division duplex, TDD) is widely applied to a communication system. In TDD, time domain resources are classified into an uplink time domain resource and a downlink time domain resource, which are respectively used for uplink transmission and downlink transmission. In a TDD system, uplink time domain resource allocation is limited, resulting in a small quantity of uplink frequency domain resources, and poor uplink coverage. Subband full duplex (Subband full duplex, SBFD) includes subband non-overlapping full duplex (Subband non-overlapping full duplex) and subband overlapping full duplex (Subband overlapping full duplex). In subband full duplex, a frequency domain resource on one downlink time domain resource is divided into one or more downlink subbands and one or more uplink subbands, to increase a quantity of uplink frequency domain resources and improve uplink coverage. In addition, dynamic/flexible TDD enables different cells to use different uplink and downlink slot configurations, and supports a dynamic change of the uplink and downlink slot configuration, to improve spectrum utilization efficiency.

In SBFD and dynamic/flexible TDD, cross-link interference (Cross-link interference, CLI) between network devices is introduced. Therefore, in the two scenarios, the CLI between the network devices needs to be measured, to suppress impact of the CLI on communication. However, how to design a CLI measurement resource to avoid impact on communication performance of a cell edge terminal device during CLI measurement is a problem that needs to be resolved.

### SUMMARY

This application provides a communication method, apparatus, and system, to reduce impact of a muted resource on communication performance of an edge terminal device, and improve communication efficiency.

According to a first aspect, a communication method is provided. The method may be performed by a terminal device, or may be performed by a component (for example, a chip or a circuit) in the terminal device. This is not limited in this application. For ease of description, the following uses an example in which the method is performed by the terminal device for description.

The method may include: receiving first signaling and second signaling, where the first signaling indicates to send a first signal on a first resource, the second signaling indicates a second resource that is not used for uplink transmission, the second resource overlaps with the first resource in time domain, the second resource includes a plurality of resource elements REs in one resource block RB, and the plurality of REs are REs with indexes of nN+k, where n is an integer greater than or equal to 0 and less than or equal to 12/N-1, k indicates N-1 different integers from 0 to N-1, and N is a positive integer; and sending the first signal on a third resource, where the third resource is determined based on the first resource and the second resource.

The foregoing solution provides a frequency domain structure of a muted resource. The resource elements REs with the indexes of nN+k are muted in frequency domain, and in correspondence to the time domain, this is equivalent to extending a time domain signal periodicity. Therefore, the muted resource of the frequency domain structure does not damage a single-carrier characteristic of a discrete Fourier transform-spread-orthogonal frequency division multiplexing (Discrete Fourier Transform-Spread-Orthogonal Frequency Division Multiplexing, DFT-S-OFDM) waveform, so that a cell edge terminal device that performs transmission by using the DFT-S-OFDM waveform can still achieve good performance, to provide assurance for communication of the cell edge terminal device.

In a possible design, the second resource does not overlap with a fourth resource in time domain, and the fourth resource is a resource that carries at least one of a demodulation reference signal DMRS in the first signal or uplink control information UCI in the first signal.

According to the foregoing solution, the second resource does not overlap, in time domain, with important information such as the DMRS or the UCI in the first signal, to avoid a conflict between CLI measurement and the important information in the first signal.

In a possible design, the third resource is a resource other than the second resource in the first resource.

According to the foregoing solution, when the important information such as the DMRS or the UCI in the first signal does not overlap, in time domain, with the second resource used for CLI measurement, the second resource can be used for CLI measurement, and the important information in the first signal can also be normally sent.

In a possible design, the second resource overlaps with a fourth resource in time domain, and the fourth resource is a resource that carries at least one of a DMRS in the first signal or UCI in the first signal.

According to the foregoing solution, flexibility of measurement and scheduling is ensured.

In a possible design, the third resource is the first resource; or the third resource is a resource other than a fifth resource in the first resource, and the fifth resource is a resource other than the fourth resource in the second resource.

According to the foregoing solution, when important information such as the DMRS or the UCI in the first signal overlaps, in time domain, with the second resource used for CLI measurement, sending of the important information in the first signal is ensured, and the second resource can also be used for CLI measurement as much as possible, to improve resource utilization.

In a possible design, N is 2, 3, 4, or 6.

In a possible design, k and/or N are/is indicated by the second signaling or predefined in a protocol.

In a possible design, a transmit power spectral density of the first signal on a symbol in which the first resource overlaps with the second resource is N times a transmit power spectral density of the first signal on a symbol in which the first resource does not overlap with the second resource.

According to the foregoing solution, when a part of frequency domain resources are not used for transmission, power of the terminal device is fully used for transmission, to improve uplink coverage performance of the cell edge terminal device.

In a possible design, the second signaling indicates a start symbol index and a length that are of the second resource in one slot; the second signaling includes a first bitmap, a bit included in the first bitmap is in one-to-one correspondence with a symbol in a slot, and a symbol corresponding to a bit whose bit value is a first value in the first bitmap belongs to the second resource; or the second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

According to the foregoing solution, a time domain position of the second resource is flexibly indicated, to reduce signaling overheads as much as possible.

According to a second aspect, a communication method is provided. The method may be performed by a network device, or may be performed by a component (for example, a chip or a circuit) in the network device. This is not limited in this application. For ease of description, the following uses an example in which the method is performed by the network device for description.

The method may include: sending first signaling and second signaling to a terminal device, where the first signaling indicates the terminal device to send a first signal on a first resource, the second signaling indicates a second resource that is not used by the terminal device for uplink transmission, the second resource overlaps with the first resource in time domain, the second resource includes a plurality of resource elements REs in one RB, and the plurality of REs are REs with indexes of nN+k, where n is an integer greater than or equal to 0 and less than or equal to 12/N-1, k indicates N-1 different integers from 0 to N-1, and N is a positive integer; and receiving the first signal on a third resource, where the third resource is determined based on the first resource and the second resource.

The foregoing solution provides a frequency domain structure of a muted resource. The resource elements REs with the indexes of nN+k are muted in frequency domain, and in correspondence to the time domain, this is equivalent to extending a time domain signal periodicity. Therefore, the muted resource of the frequency domain structure does not damage a single-carrier characteristic of a DFT-S-OFDM waveform, so that a cell edge terminal device that performs transmission by using the DFT-S-OFDM waveform can still achieve good performance, to provide assurance for communication of the cell edge terminal device.

In a possible design, cross-link interference CLI measurement is performed on the second resource, where the second resource does not overlap with a fourth resource in time domain, and the fourth resource is a resource that carries at least one of a demodulation reference signal DMRS in the first signal or uplink control information UCI in the first signal.

According to the foregoing solution, the second resource does not overlap, in time domain, with important information such as the DMRS or the UCI in the first signal, to avoid a conflict between the CLI measurement and the important information in the first signal.

In a possible design, the third resource is a resource other than the second resource in the first resource.

According to the foregoing solution, when the important information such as the DMRS or the UCI in the first signal does not overlap, in time domain, with the second resource used for CLI measurement, the second resource can be used for CLI measurement, and the important information in the first signal can also be normally sent.

In a possible design, the second resource overlaps with a fourth resource in time domain, and the fourth resource is a resource that carries at least one of a DMRS in the first signal or UCI in the first signal.

According to the foregoing solution, flexibility of measurement and scheduling is ensured.

In a possible design, performing CLI measurement is skipped on the second resource, where the third resource is the first resource; or CLI measurement is performed on a resource other than the fourth resource in the second resource, where the third resource is a resource other than a fifth resource in the first resource, and the fifth resource is the resource other than the fourth resource in the second resource.

According to the foregoing solution, when important information such as the DMRS or the UCI in the first signal overlaps, in time domain, with the second resource used for CLI measurement, sending of the important information in the first signal is ensured, and the second resource can also be used for CLI measurement as much as possible, to improve resource utilization.

In a possible design, N is 2, 3, 4, or 6.

In a possible design, k and/or N are/is indicated by the second signaling or predefined in a protocol.

In a possible design, a transmit power spectral density of the first signal on a symbol in which the first resource overlaps with the second resource is N times a transmit power spectral density of the first signal on a symbol in which the first resource does not overlap with the second resource.

According to the foregoing solution, when a part of frequency domain resources are not used for transmission, power of the terminal device is fully used for transmission.

In a possible design, the second signaling indicates a start symbol index and a length that are of the second resource in one slot; the second signaling includes a first bitmap, a bit included in the first bitmap is in one-to-one correspondence with a symbol in a slot, and a symbol corresponding to a bit whose bit value is a first value in the first bitmap belongs to the second resource; or the second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

According to the foregoing solution, a time domain position of the second resource is flexibly indicated, to reduce signaling overheads as much as possible.

According to a third aspect, a communication method is provided. The method may be performed by a terminal device, or may be performed by a component (for example, a chip or a circuit) in the terminal device. This is not limited in this application. For ease of description, the following uses an example in which the method is performed by the terminal device for description.

The method may include: receiving first signaling and second signaling, where the first signaling indicates to send a first signal on a first resource, the second signaling indicates a second resource that is not used for uplink transmission, the second resource overlaps with the first resource in time domain, and a frequency domain position of the second resource in one resource block RB is a resource element RE with an index of an odd number or an even number; and sending the first signal on a third resource, where the third resource is determined based on the first resource and the second resource.

The foregoing solution provides a frequency domain structure of a muted resource. The resource element RE with the index of the odd number or the even number is muted in frequency domain, and in correspondence to the time domain, this is equivalent to extending a time domain signal periodicity. Therefore, the muted resource of the frequency domain structure does not damage a single-carrier characteristic of a DFT-S-OFDM waveform, so that a cell edge terminal device that performs transmission by using the DFT-S-OFDM waveform can still achieve good performance, to provide assurance for communication of the cell edge terminal device.

In a possible design, the second resource does not overlap with a fourth resource in time domain, and the fourth resource is a resource that carries at least one of a demodulation reference signal DMRS in the first signal or uplink control information UCI in the first signal.

According to the foregoing solution, the second resource does not overlap, in time domain, with important information such as the DMRS or the UCI in the first signal, to avoid a conflict between CLI measurement and the important information in the first signal.

In a possible design, the third resource is a resource other than the second resource in the first resource.

According to the foregoing solution, when the important information such as the DMRS or the UCI in the first signal does not overlap, in time domain, with the second resource used for CLI measurement, the second resource can be used for CLI measurement, and the important information in the first signal can also be normally sent.

In a possible design, the second resource overlaps with a fourth resource in time domain, and the fourth resource is a resource that carries at least one of a DMRS in the first signal or UCI in the first signal.

According to the foregoing solution, flexibility of measurement and scheduling is ensured.

In a possible design, the third resource is the first resource; or the third resource is a resource other than a fifth resource in the first resource, and the fifth resource is a resource other than the fourth resource in the second resource.

According to the foregoing solution, when important information such as the DMRS or the UCI in the first signal overlaps, in time domain, with the second resource used for CLI measurement, sending of the important information in the first signal is ensured, and the second resource can also be used for CLI measurement as much as possible, to improve resource utilization.

In a possible design, a transmit power spectral density of the first signal on a symbol in which the first resource overlaps with the second resource is twice a transmit power spectral density of the first signal on a symbol in which the first resource does not overlap with the second resource.

According to the foregoing solution, when a part of frequency domain resources are not used for transmission, power of the terminal device is fully used for transmission, to improve uplink coverage performance of the cell edge terminal device.

In a possible design, the second signaling indicates a start symbol index and a length that are of the second resource in one slot; the second signaling includes a first bitmap, a bit included in the first bitmap is in one-to-one correspondence with a symbol in a slot, and a symbol corresponding to a bit whose bit value is a first value in the first bitmap belongs to the second resource; or the second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

According to the foregoing solution, a time domain position of the second resource is flexibly indicated, to reduce signaling overheads as much as possible.

According to a fourth aspect, a communication method is provided. The method may be performed by a network device, or may be performed by a component (for example, a chip or a circuit) in the network device. This is not limited in this application. For ease of description, the following uses an example in which the method is performed by the network device for description.

The method may include: sending first signaling and second signaling to a terminal device, where the first signaling indicates the terminal device to send a first signal on a first resource, the second signaling indicates a second resource that is not used by the terminal device for uplink transmission, the second resource overlaps with the first resource in time domain, and a frequency domain position of the second resource in one RB is an RE with an index of an odd number or an even number; and receiving the first signal on a third resource, where the third resource is determined based on the first resource and the second resource.

The foregoing solution provides a frequency domain structure of a muted resource. The resource element RE with the index of the odd number or the even number is muted in frequency domain, and in correspondence to the time domain, this is equivalent to extending a time domain signal periodicity. Therefore, the muted resource of the frequency domain structure does not damage a single-carrier characteristic of a DFT-S-OFDM waveform, so that a cell edge terminal device that performs transmission by using the DFT-S-OFDM waveform can still achieve good performance, to provide assurance for communication of the cell edge terminal device.

In a possible design, cross-link interference CLI measurement is performed on the second resource, where the second resource does not overlap with a fourth resource in time domain, and the fourth resource is a resource that carries at least one of a demodulation reference signal DMRS in the first signal or uplink control information UCI in the first signal.

According to the foregoing solution, the second resource does not overlap, in time domain, with important information such as the DMRS or the UCI in the first signal, to avoid a conflict between the CLI measurement and the important information in the first signal.

In a possible design, the third resource is a resource other than the second resource in the first resource.

According to the foregoing solution, when the important information such as the DMRS or the UCI in the first signal does not overlap, in time domain, with the second resource used for CLI measurement, the second resource can be used for CLI measurement, and the important information in the first signal can also be normally sent.

In a possible design, the second resource overlaps with a fourth resource in time domain, and the fourth resource is a resource that carries at least one of a DMRS in the first signal or UCI in the first signal.

According to the foregoing solution, flexibility of measurement and scheduling is ensured.

In a possible design, performing CLI measurement is skipped on the second resource, where the third resource is the first resource; or CLI measurement is performed on a resource other than the fourth resource in the second resource, where the third resource is a resource other than a fifth resource in the first resource, and the fifth resource is the resource other than the fourth resource in the second resource.

According to the foregoing solution, when important information such as the DMRS or the UCI in the first signal overlaps, in time domain, with the second resource used for CLI measurement, sending of the important information in the first signal is ensured, and the second resource can also be used for CLI measurement as much as possible, to improve resource utilization.

In a possible design, a transmit power spectral density of the first signal on a symbol in which the first resource overlaps with the second resource is twice a transmit power spectral density of the first signal on a symbol in which the first resource does not overlap with the second resource.

According to the foregoing solution, when a part of frequency domain resources are not used for transmission, power of the terminal device is fully used for transmission.

In a possible design, the second signaling indicates a start symbol index and a length that are of the second resource in one slot; the second signaling includes a first bitmap, a bit included in the first bitmap is in one-to-one correspondence with a symbol in a slot, and a symbol corresponding to a bit whose bit value is a first value in the first bitmap belongs to the second resource; or the second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

According to the foregoing solution, a time domain position of the second resource is flexibly indicated, to reduce signaling overheads as much as possible.

According to a fifth aspect, a communication method is provided. The method may be performed by a terminal device, or may be performed by a component (for example, a chip or a circuit) in the terminal device. This is not limited in this application. For ease of description, the following uses an example in which the method is performed by the terminal device for description.

The method may include: receiving first signaling and second signaling, where the first signaling indicates to send a first signal on a first resource, the second signaling indicates a second resource that is not used for uplink transmission, the second resource overlaps with the first resource in time domain, the second resource includes a plurality of REs in one resource block RB, and the plurality of REs are REs other than an RE with an index of nN+y in all REs in the resource block RB, where n is an integer greater than or equal to 0 and less than or equal to 12/N-1, y indicates one integer from 0 to N-1, and N is a positive integer; and sending the first signal on a third resource, where the third resource is determined based on the first resource and the second resource.

The foregoing solution provides a frequency domain structure of a muted resource. The REs other than the RE with the index of nN+y are muted in frequency domain, and in correspondence to the time domain, this is equivalent to extending a time domain signal periodicity. Therefore, the muted resource of the frequency domain structure does not damage a single-carrier characteristic of a DFT-S-OFDM waveform, so that a cell edge terminal device that performs transmission by using the DFT-S-OFDM waveform can still achieve good performance, to provide assurance for communication of the cell edge terminal device.

In a possible design, the second resource does not overlap with a fourth resource in time domain, and the fourth resource is a resource that carries at least one of a demodulation reference signal DMRS in the first signal or uplink control information UCI in the first signal.

According to the foregoing solution, the second resource does not overlap, in time domain, with important information such as the DMRS or the UCI in the first signal, to avoid a conflict between CLI measurement and the important information in the first signal.

In a possible design, the third resource is a resource other than the second resource in the first resource.

According to the foregoing solution, when the important information such as the DMRS or the UCI in the first signal does not overlap, in time domain, with the second resource used for CLI measurement, the second resource can be used for CLI measurement, and the important information in the first signal can also be normally sent.

In a possible design, the second resource overlaps with a fourth resource in time domain, and the fourth resource is a resource that carries at least one of a DMRS in the first signal or UCI in the first signal.

According to the foregoing solution, flexibility of measurement and scheduling is ensured.

In a possible design, the third resource is the first resource; or the third resource is a resource other than a fifth resource in the first resource, and the fifth resource is a resource other than the fourth resource in the second resource.

According to the foregoing solution, when important information such as the DMRS or the UCI in the first signal overlaps, in time domain, with the second resource used for CLI measurement, sending of the important information in the first signal is ensured, and the second resource can also be used for CLI measurement as much as possible, to improve resource utilization.

In a possible design, N is 2, 3, 4, or 6.

In a possible design, y and/or N are/is indicated by the second signaling or predefined in a protocol.

In a possible design, a transmit power spectral density of the first signal on a symbol in which the first resource overlaps with the second resource is N times a transmit power spectral density of the first signal on a symbol in which the first resource does not overlap with the second resource.

According to the foregoing solution, when a part of frequency domain resources are not used for transmission, power of the terminal device is fully used for transmission, to improve uplink coverage performance of the cell edge terminal device.

In a possible design, the second signaling indicates a start symbol index and a length that are of the second resource in one slot; the second signaling includes a first bitmap, a bit included in the first bitmap is in one-to-one correspondence with a symbol in a slot, and a symbol corresponding to a bit whose bit value is a first value in the first bitmap belongs to the second resource; or the second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

According to the foregoing solution, a time domain position of the second resource is flexibly indicated, to reduce signaling overheads as much as possible.

According to a sixth aspect, a communication method is provided. The method may be performed by a network device, or may be performed by a component (for example, a chip or a circuit) in the network device. This is not limited in this application. For ease of description, the following uses an example in which the method is performed by the network device for description.

The method may include: sending first signaling and second signaling to a terminal device, where the first signaling indicates the terminal device to send a first signal on a first resource, the second signaling indicates a second resource that is not used by the terminal device for uplink transmission, the second resource overlaps with the first resource in time domain, the second resource includes a plurality of REs in one RB, and the plurality of REs are REs other than an RE with an index of nN+y in all REs in the resource block RB, where n is an integer greater than or equal to 0 and less than or equal to 12/N-1, y indicates one integer from 0 to N-1, and N is a positive integer; and receiving the first signal on a third resource, where the third resource is determined based on the first resource and the second resource.

The foregoing solution provides a frequency domain structure of a muted resource. The REs other than the RE with the index of nN+y are muted in frequency domain, and in correspondence to the time domain, this is equivalent to extending a time domain signal periodicity. Therefore, the muted resource of the frequency domain structure does not damage a single-carrier characteristic of a DFT-S-OFDM waveform, so that a cell edge terminal device that performs transmission by using the DFT-S-OFDM waveform can still achieve good performance, to provide assurance for communication of the cell edge terminal device.

In a possible design, cross-link interference CLI measurement is performed on the second resource, where the second resource does not overlap with a fourth resource in time domain, and the fourth resource is a resource that carries at least one of a demodulation reference signal DMRS in the first signal or uplink control information UCI in the first signal.

According to the foregoing solution, the second resource does not overlap, in time domain, with important information such as the DMRS or the UCI in the first signal, to avoid a conflict between the CLI measurement and the important information in the first signal.

In a possible design, the third resource is a resource other than the second resource in the first resource.

According to the foregoing solution, when the important information such as the DMRS or the UCI in the first signal does not overlap, in time domain, with the second resource used for CLI measurement, the second resource can be used for CLI measurement, and the important information in the first signal can also be normally sent.

In a possible design, the second resource overlaps with a fourth resource in time domain, and the fourth resource is a resource that carries at least one of a DMRS in the first signal or UCI in the first signal.

According to the foregoing solution, flexibility of measurement and scheduling is ensured.

In a possible design, performing CLI measurement is skipped on the second resource, where the third resource is the first resource; or CLI measurement is performed on a resource other than the fourth resource in the second resource, where the third resource is a resource other than a fifth resource in the first resource, and the fifth resource is the resource other than the fourth resource in the second resource.

According to the foregoing solution, when important information such as the DMRS or the UCI in the first signal overlaps, in time domain, with the second resource used for CLI measurement, sending of the important information in the first signal is ensured, and the second resource can also be used for CLI measurement as much as possible, to improve resource utilization.

In a possible design, N is 2, 3, 4, or 6.

In a possible design, y and/or N are/is indicated by the second signaling or predefined in a protocol.

In a possible design, a transmit power spectral density of the first signal on a symbol in which the first resource overlaps with the second resource is N times a transmit power spectral density of the first signal on a symbol in which the first resource does not overlap with the second resource.

According to the foregoing solution, when a part of frequency domain resources are not used for transmission, power of the terminal device is fully used for transmission.

In a possible design, the second signaling indicates a start symbol index and a length that are of the second resource in one slot; the second signaling includes a first bitmap, a bit included in the first bitmap is in one-to-one correspondence with a symbol in a slot, and a symbol corresponding to a bit whose bit value is a first value in the first bitmap belongs to the second resource; or the second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

According to the foregoing solution, a time domain position of the second resource is flexibly indicated, to reduce signaling overheads as much as possible.

Correspondingly, this application further provides a communication apparatus. The apparatus may implement the communication method according to the first aspect or the sixth aspect. For example, the apparatus may be a terminal device or a network device, or may be another apparatus that can implement the foregoing communication method. The apparatus may implement the foregoing method by software, hardware, or hardware executing corresponding software.

In a possible design, the device may include a processor and a memory. The processor is configured to support the device in performing a corresponding function in the method according to any one of the foregoing aspects. The memory is configured to be coupled to the processor, and stores program instructions and data that are necessary for the device. In addition, the device may further include a communication interface configured to support communication between the device and another device. The communication interface may be a transceiver or a transceiver circuit.

According to still another aspect, an embodiment of this application provides a communication system. The system includes the communication device according to the foregoing aspect.

According to still another aspect of this application, a computer-readable storage medium is provided, where the computer-readable storage medium stores instructions. When the instructions are run on a computer, the computer is enabled to perform the method according to the foregoing aspects.

According to still another aspect of this application, a computer program product including instructions is provided. When the computer program product runs on a computer, the computer is enabled to perform the method according to the foregoing aspects.

This application further provides a chip system. The chip system includes a processor, and may further include a memory, to implement the method according to any one of the foregoing aspects.

Any device, computer storage medium, computer program product, chip system, or communication system provided above is configured to perform a corresponding method provided above. Therefore, for beneficial effects that can be achieved by the device, computer storage medium, computer program product, chip system, or communication system, refer to beneficial effects of corresponding solutions in the corresponding method provided above. Details are not described herein again.

### BRIEF DESCRIPTION OF DRAWINGS

FIG. 1 is a diagram of a network architecture according to an embodiment of this application;
FIG. 2 is a diagram of a TDD communication system according to an embodiment of this application;
FIG. 3 is a diagram of an SBFD communication system according to an embodiment of this application;
FIG. 4 is a diagram of a dynamic/flexible TDD communication system according to an embodiment of this application;
FIG. 5 is a diagram of a time-frequency pattern of a CSI-IM resource according to an embodiment of this application;
FIG. 6 is a diagram of interaction of a communication method according to an embodiment of this application;
FIG. 7 is a diagram of a time-frequency pattern of a CLI measurement resource according to an embodiment of this application;
FIG. 8 is a diagram of a communication apparatus according to an embodiment of this application;
FIG. 9 is a diagram of another communication apparatus according to an embodiment of this application;
FIG. 10 is a diagram of still another communication apparatus according to an embodiment of this application; and
FIG. 11 is a diagram of a communication system according to an embodiment of this application.

### DESCRIPTION OF EMBODIMENTS

The following describes technical solutions in this application with reference to the accompanying drawings.

The technical solutions in embodiments of this application may be applied to various communication systems, such as a global system for mobile communication (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th Generation, 5G) mobile communication system or a new radio (new radio, NR) system. The 5G mobile communication system may be non-standalone (non-standalone, NSA) networking or standalone (standalone, SA) networking.

The technical solutions provided in this application may be further applied to machine type communication (machine type communication, MTC), a long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle-to-everything (vehicle to X, V2X, where X may represent everything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

The technical solutions provided in this application may be further applied to a future communication system, for example, a 6th generation (6th Generation, 6G) mobile communication system. This is not limited in this application.

In embodiments of this application, a terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal may be widely used in various scenarios, such as device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. Neither of a specific technology nor a specific device form used for the terminal is limited in embodiments of this application.

The terminal device may be a device that provides voice/data connectivity for a user, such as a handheld device or a vehicle-mounted device that has a wireless connection function. Currently, some examples of the terminal may be: a mobile phone (mobile phone), a tablet computer (pad), a computer (for example, a notebook computer or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical) health care, a wireless terminal in a smart grid (smart grid), a wireless terminal in transportation safety (transportation safety), a wireless terminal in a smart city (smart city), a wireless terminal (for example, a home appliance like a television, a smart box, or a game console) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes full-featured and large-sized devices that can implement complete or partial functions without depending on a smartphone, such as a smart watch or smart glasses, and devices, such as various smart bands or smart jewelry for monitoring physical signs, that are dedicated to only a specific type of application function and need to be used together with another device, for example, a smartphone.

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-to-machine interconnection and thing-to-thing interconnection. The IoT technology can achieve massive connections, deep coverage, and terminal power saving by using, for example, a narrow band (narrow band, NB) technology.

In embodiments of this application, the terminal device may alternatively be a vehicle or an entire vehicle, and may implement communication via the internet of vehicles, or may be a component located in a vehicle (for example, placed in the vehicle or mounted in the vehicle), namely, a vehicle-mounted terminal device, a vehicle-mounted module, or an on-board unit (on-board unit, OBU).

In addition, the terminal device may alternatively include a sensor such as an intelligent printer, a train detector, and a gas station. Main functions include collecting data (a part of terminal devices), receiving control information and downlink data from a network device, sending an electromagnetic wave, and transmitting uplink data to the network device.

In embodiments of this application, the network device may be any device having a wireless transceiver function. The device includes but is not limited to: a base station (base station), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), or an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system; may be a next generation NodeB (next generation NodeB, gNB) or a transmission point (TRP or TP) in a 5G, for example, NR system, one or one group of antenna panels (including a plurality of antenna panels) of a base station in a 5G system; or may be a network node that forms a gNB or a transmission point, such as a baseband unit (BBU), a distributed unit (distributed unit, DU), or a base station in a next generation 6G communication system.

In some deployments, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements a part of physical layer processing functions, radio frequency processing, and functions related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that, the network device may be a device including one or more of a CU node, a DU node, and an AAU node. In addition, the CU may be classified as a network device in a RAN, or the CU may be classified as a network device in a core network (core network, CN). This is not limited in this application.

The network device provides a service for a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), and the like. These small cells have characteristics of small coverage and low transmit power, and are applicable to providing a high-rate data transmission service.

The following uses an example to describe a network architecture to which an embodiment of this application is applicable.

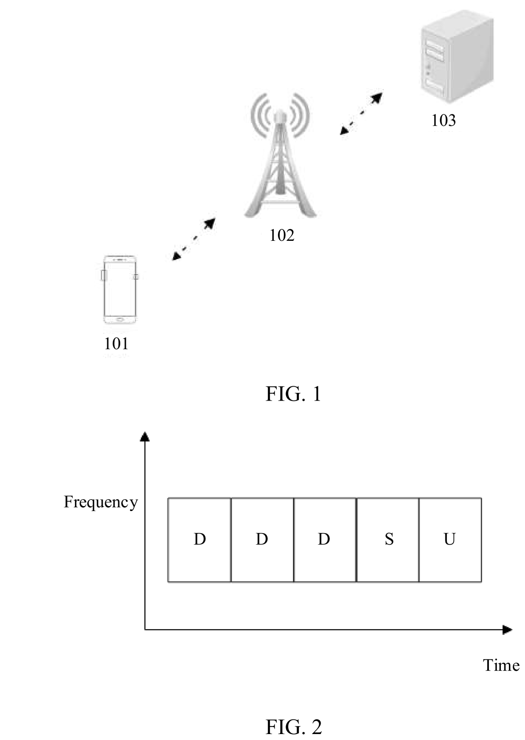

FIG. 1 is a diagram of a network architecture according to an embodiment of this application. As shown in FIG. 1, the network architecture may include a terminal device 101, a network device 102, and a core network device 103. The terminal device 101 may be connected to the network device 102 in a wireless manner, and may access the core network device 103 via the network device 102. The terminal device 101 may be at a fixed position, or may be movable.

It should be noted that, quantities and types of network devices, terminal devices, and core network devices included in the network architecture shown in FIG. 1 are merely examples. Embodiments of this application are not limited thereto. For example, the network architecture may alternatively include more or fewer terminal devices that communicate with the network device. For example, the network architecture may alternatively include more or fewer core network devices that communicate with the network device. For conciseness of description, this is not described in the accompanying drawings. In addition, in the network architecture shown in FIG. 1, although the network device, the terminal device, and the core network device are shown, such an application scenario may include but is not limited to the network device, the terminal device, and the core network device. For example, the application scenario may further include a device configured to carry a virtualized network function. These are clear to a person skilled in the art, and details are not described herein.

The following first provides definitions of technical terms that may appear in embodiments of this application. The terms used in implementations of this application are only used for explaining specific embodiments of this application, but are not intended to limit this application.

### 1. Subband non-overlapping full duplex

In TDD, time domain resources are classified into an uplink time domain resource and a downlink time domain resource. For example, a possible TDD uplink/downlink configuration is DDDSU, as shown in FIG. 2, where D indicates a downlink slot, and each symbol in the downlink slot is a downlink symbol; U indicates an uplink slot, and each symbol in the uplink slot is an uplink symbol; and S is a special slot, and the special slot includes at least a flexible symbol. Uplink time domain resource allocation is limited, resulting in a reduction in uplink coverage of TDD and an increase in a delay.

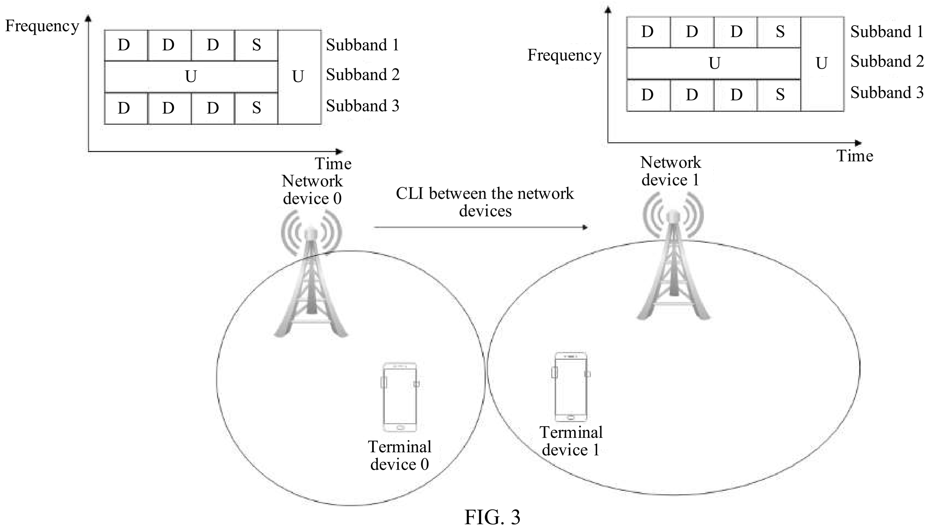

A possible enhancement method is to use SBFD. In SBFD, a frequency band of the downlink symbol is divided into one or more uplink subbands and one or more downlink subbands, and downlink sending in the uplink subband of the downlink symbol is allowed. For example, as shown in FIG. 3, a network device 0 and a network device 1 each divide one frequency band into three subbands, where a subband 1 and a subband 3 are both normal DDDSU configurations, and a subband 2 is an uplink subband, and send such a frequency band configuration to a terminal device, to facilitate communication of the terminal device. Therefore, compared with TDD, SBFD has more uplink resources to improve uplink coverage performance. In addition, each slot has an uplink resource for hybrid automatic repeat request-acknowledgment (Hybrid Automatic Repeat Request-Acknowledgment, HARQ-ACK) feedback, to reduce a delay.

Currently, the network device supports full duplex (Full duplex, FD) SBFD, that is, sending in an uplink subband and receiving in a downlink subband may be simultaneously performed in one slot. UE supports only half duplex (Half duplex, HF) SBFD, that is, in one slot, sending can be performed only in an uplink subband or receiving can be performed only in a downlink subband.

### 2. Dynamic/Flexible TDD

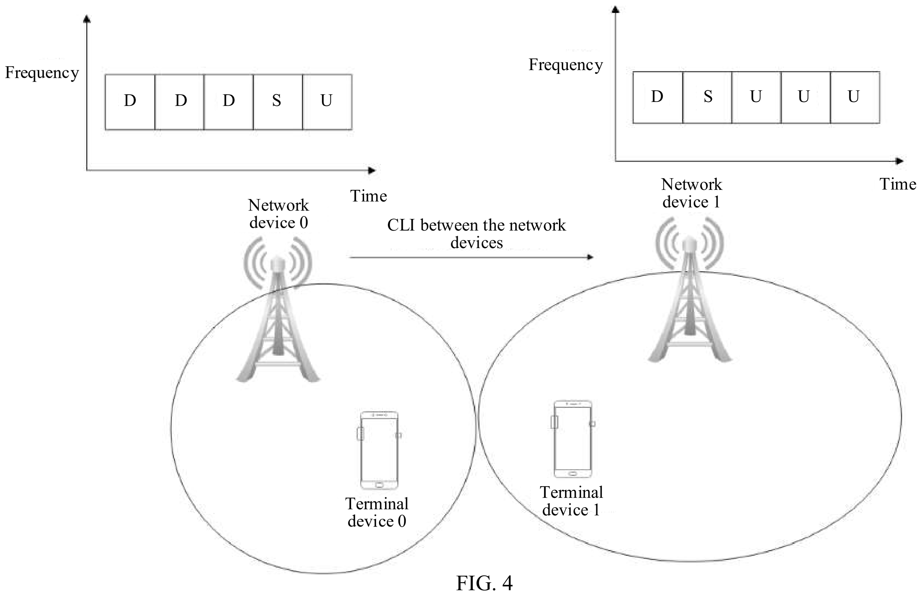

Dynamic/flexible TDD supports different cells in using different uplink and downlink slot configurations, and supports a dynamic change of the uplink and downlink slot configuration. For example, as shown in FIG. 4, a slot configuration used by a network device 0 is DDDSU, a slot configuration used by a network device 1 that is adjacent to the network device 0 is DSUUU, and the slot configurations are sent to respective terminal devices of the network device 0 and the network device 1, to facilitate communication of the terminal device.

### 3. Cross-link interference

In SBFD and dynamic/flexible TDD, cross-link interference between network devices, namely, interference of a down link to an up link and interference of the up link to the down link, and more specifically, interference to a downlink signal sent by the network device to a terminal device served by the network device and interference to an uplink signal received by an adjacent network device from a terminal device served by the adjacent network device, is introduced. For example, as shown in FIG. 3, a network device 0 and a network device 1 are two adjacent network devices, and a downlink signal of the network device 0 in a slot D in a subband 1 causes cross-link interference to a slot U in a subband 2 of the network device 1. For another example, as shown in FIG. 4, a network device 0 and a network device 1 are two adjacent network devices, and a downlink signal of the network device 0 in a 3^{rd} slot D causes cross-link interference to a slot U of the network device 1.

### 4. Discrete Fourier transform-spread-orthogonal frequency division multiplexing

An uplink edge user usually uses a discrete Fourier transform-spread-orthogonal frequency division multiplexing (Discrete Fourier Transform-Spread-Orthogonal Frequency Division Multiplexing, DFT-S-OFDM) waveform for uplink transmission. The DFT-S-OFDM waveform has a single-carrier characteristic and has a low peak to average power ratio (Peak to average power ratio, PAPR). Therefore, higher transmit power can be used to achieve better uplink edge coverage performance.

### 5. Channel state information-interference measurement (channel state information-interference measurement, CSI-IM)

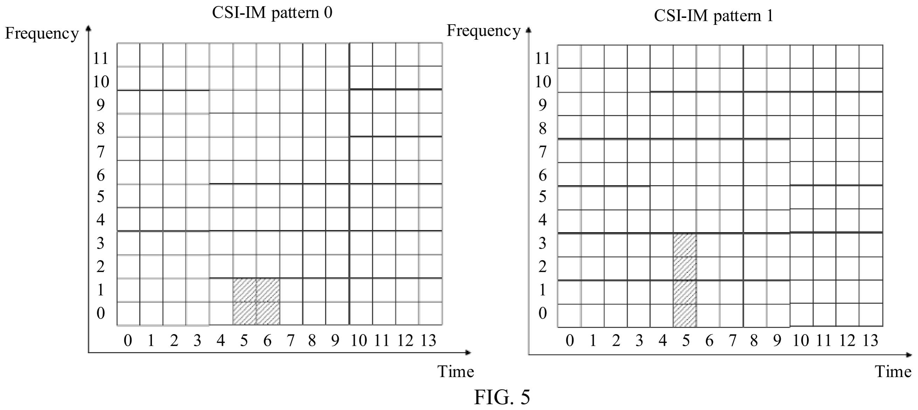

A network device may measure inter-cell downlink interference by configuring a CSI-IM resource. The CSI-IM resource supports two time-frequency patterns (patterns), namely, a pattern 0 and a pattern 1. As shown in FIG. 5, a left figure is the CSI-IM pattern 0, and a right figure is the CSI-IM pattern 1. Four resource elements (resource elements, REs) are used in each of the time-frequency patterns, but time-frequency structures are different. The four REs in the pattern 0 are REs with indexes of 0 and 1 for a symbol 5 and a symbol 6, and the four REs in the pattern 1 are REs with indexes of 0, 1, 2, and 3 for a symbol 5.

For SBFD and dynamic/flexible TDD, because the CLI exists, the CLI between the network devices needs to be measured to suppress impact of the CLI between the network devices on uplink communication. However, if a CSI-IM resource in a conventional technology is used, for a terminal device that uses the DFT-S-OFDM waveform, the single-carrier characteristic of the DFT-S-OFDM waveform is damaged, resulting in an increase in the PAPR. Consequently, coverage performance of a cell edge terminal device is reduced.

To resolve the foregoing problem, an embodiment of this application provides a new CLI measurement resource between network devices. Based on the resource, CLI measurement can be ensured without damaging a single-carrier characteristic of a DFT-S-OFDM waveform, to provide assurance for communication of a cell edge terminal device.

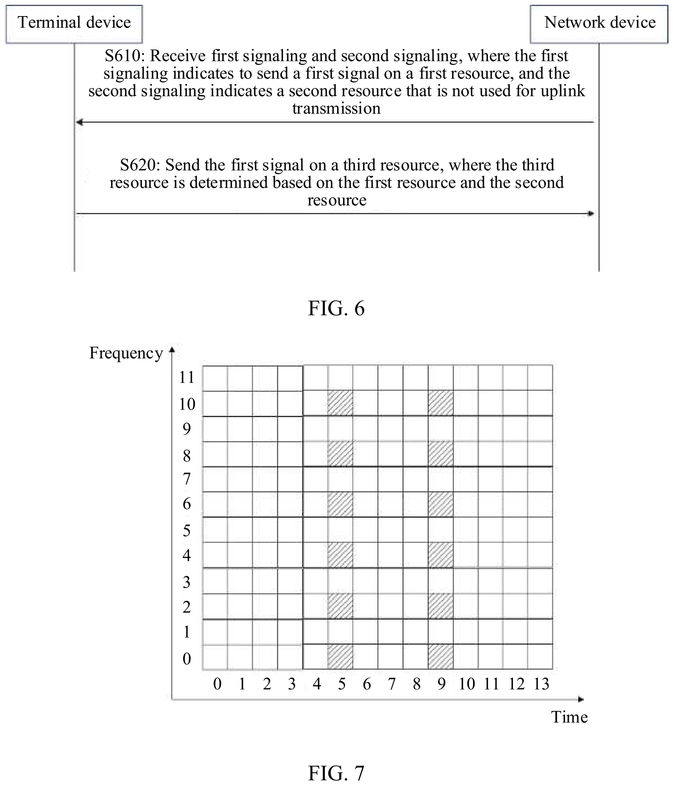

FIG. 6 is a diagram of an example of a communication method according to an embodiment of this application. The method may be performed by a terminal device and a network device, or may be performed by a chip in the terminal device and a chip in the network device. It should be understood that, FIG. 6 shows steps or operations of the communication method. However, these steps or operations are merely examples. In this embodiment of this application, other operations or variations of the operations in FIG. 6 may be further performed, or appropriate switching between the steps may be performed.

S610: The terminal device receives first signaling and second signaling.

Correspondingly, the network device sends the first signaling and the second signaling.

The first signaling indicates to send a first signal on a first resource. It should be understood that, although the network device indicates, based on the first signaling, the terminal device to send the first signal on the first resource, for another reason, for example, when the first resource conflicts with another resource, the terminal device may send the signal only on a part of the first resource or may not send the first signal.

In a possible implementation, the second signaling indicates a second resource that is not used for uplink transmission. In a possible implementation, the second signaling indicates that the terminal device is not expected to perform uplink transmission on a second resource. In this application, the resource that is not used for transmission is equivalent to a muted resource.

It should be understood that, although the second signaling indicates to the terminal device that uplink transmission cannot be performed on the second resource, the terminal device may perform uplink transmission on at least a part of the second resource for another reason, for example, when a priority of the first signal is high.

In a possible implementation, the second signaling indicates a second resource, and the second resource is used by the network device to perform CLI measurement. The network device may measure CLI between network devices on the second resource. When the network device performs CLI measurement, the terminal device is not expected to perform uplink transmission on the second resource. Otherwise, the network device receives, on the second resource, both the CLI between the network devices, and an uplink signal sent by the terminal device. This affects accuracy of the CLI measurement. It should be understood that, although the second signaling indicates the second resource, and the second resource is used by the network device to perform CLI measurement, for another reason, for example, when the second resource conflicts with another resource, the network device may perform CLI measurement on a part of the second resource, or may not perform CLI measurement on the second resource.

The first resource overlaps with the second resource in time domain.

It should be understood that, there is no constraint in a time sequence between the first signaling and the second signaling. To be specific, the network device may send the first signaling before the network device sends the second signaling, after the network device sends the second signaling, or at the same time when the network device sends the second signaling.

In a possible implementation, the second signaling is cell-level or group-level. For example, the network device sends the second signaling to all terminal devices served by the network device. It should be understood that, when the network device performs CLI measurement on the second resource, a specific terminal device is not expected to send an uplink signal on the second resource, and all other terminal devices served by the network device are not expected to send uplink signals on the second resource either. For another example, the network device sends the second signaling to a terminal device in a first group. The terminal device in the first group may be a terminal device located at a cell edge, a terminal device that affects the CLI measurement, or a terminal device corresponding to one or more beam directions. In this way, when the network device performs CLI measurement, accuracy of the CLI measurement can be ensured provided that a terminal device that has specific impact on the CLI measurement does not perform uplink transmission.

In a possible implementation, the second signaling indicates a frequency domain bandwidth of the second resource. Specifically, the frequency domain bandwidth may be indicated in a plurality of implementations.

Implementation 1: The second signaling indicates a frequency domain position of the second resource by indicating a start frequency domain position and the frequency domain bandwidth that are of the second resource.

Implementation 2: The frequency domain bandwidth of the second resource is indicated by the first signaling. For example, the frequency domain bandwidth of the second resource is a frequency domain bandwidth of the first signal, and the frequency domain bandwidth of the first signal is indicated by the first signaling.

Implementation 3: The frequency domain bandwidth of the second resource is an uplink bandwidth part (bandwidth part, BWP), an uplink subband, or an uplink carrier.

In a possible implementation, the second signaling indicates a frequency domain position of the second resource. It should be understood that, the frequency domain position herein is a position of the second resource in one RB in the frequency domain bandwidth. For example, the frequency domain position of the second resource in one resource block (resource block, RB) may be indicated by the second signaling or a first field in the second signaling.

There may be a plurality of possible implementations of the frequency domain position of the second resource in the RB.

Implementation 1: The second resource includes a plurality of REs in one RB, and the plurality of REs are REs with indexes of nN+k, where n is an integer greater than or equal to 0 and less than or equal to 12/N-1, k indicates N-1 different integers from 0 to N-1, and N is a positive integer. Optionally, if N is equal to 2, k indicates one integer from 0 to N-1. It should be understood that, that the RE index of the second resource in the RB satisfies such a relationship herein means that at least one RB in the second resource satisfies the relationship, and there may be a plurality of RBs satisfying such an RB, and other RBs may be in another relationship.

In Implementation 1, N is 2, 3, 4, or 6. N is a constant, and N can be exactly divided by a quantity of REs in the RB. For example, N can be exactly divided by 12. n is a variable, and n is an integer from 0 to 12/N-1. For example, N is a constant 3, n is an integer from 0 to 3, and k indicates two different numbers from 0 to 2. For example, k may be 0 and 1. In this case, the frequency domain position of the second resource in the RB is REs with indexes of 0×3+0=0, 0×3+1=1, 1×3+0=3, 1×3+1=4, 2×3+0=6, 2×3+1=7, 3×3+0=9, and 3×3+1=10. For another example, N is a constant 3, n is an integer from 0 to 3, and k indicates two different numbers from 0 to 2. For example, k may be 1 and 2. In this case, the frequency domain position of the second resource in the RB is REs with indexes of 0×3+1=1, 0×3+2=2, 1×3+1=4, 1×3+2=5, 2×3+1=7, 2×3+2=8, 3×3+1=10, and 3×3+2=11.

Implementation 2: The frequency domain position of the second resource in the RB is an RE with an index of 2n+k, where n is an integer from 0 to 5, and k is 0 or 1. For example, FIG. 7 shows the frequency domain position of the second resource in the RB when k is 0. In this case, the frequency domain position of the second resource in the RB is REs with indexes of 0, 2, 4, 6, 8, and 10. In FIG. 7, the second resource appears on a symbol 5 and a symbol 9 in a slot.

In Implementation 1 and Implementation 2, k and/or N are/is indicated by the second signaling or predefined in a protocol.

Implementation 3: The frequency domain position of the second resource in the RB is an RE with an index of an odd number or an even number. It should be understood that, the frequency domain position of the second resource in the RB is "comb-shaped". For example, the first field in the second signaling is "0", and it indicates that the frequency domain position of the second resource in the RB is the RE with the index of the even number; or the first field in the second signaling is "1", and it indicates that the frequency domain position of the second resource in the RB is the RE with the index of the odd number. For example, FIG. 7 shows the frequency domain position of the second resource in the RB when the first field is "0". In this case, the frequency domain position of the second resource in the RB is REs with indexes of 0, 2, 4, 6, 8, and 10. In FIG. 7, the second resource appears on a symbol 5 and a symbol 9 in a slot.

Implementation 4: The second resource includes a plurality of REs in one RB, and the plurality of REs are REs other than an RE with an index of nN+y in all REs in the resource block RB, where n is an integer greater than or equal to 0 and less than or equal to 12/N-1, y indicates one integer from 0 to N-1, and N is a positive integer. For example, N is a constant 3, n is an integer from 0 to 3, and y indicates one integer from 0 to 2. For example, y may be 0. In this case, the frequency domain position of the second resource in the RB is REs other than REs with indexes of 0×3+0=0, 1×3+0=3, 2×3+0=6, and 3×3+0=9, that is, the frequency domain position of the second resource in the RB is REs with indexes of 1, 2, 4, 5, 7, 8, 10, and 11. Optionally, y and/or N are/is indicated by the second signaling or predefined in a protocol. For other descriptions of n and N, refer to the descriptions of Implementation 1. Details are not described herein again.

In a possible implementation, the second signaling indicates a time domain position of the second resource. Specifically, the time domain position may be indicated in a plurality of implementations.

Implementation 1: The second signaling indicates the time domain position of the second resource by indicating a start time domain position and a time domain length that are of the second resource. For example, the second signaling indicates a start symbol index S and a length L that are of the second resource in one slot. It should be understood that, the time domain position of the second resource in the slot is L consecutive symbols starting from a symbol with a symbol index of S.

Implementation 2: The second signaling includes a first bitmap, a bit included in the first bitmap is in one-to-one correspondence with a symbol in a slot, and a symbol corresponding to a bit whose bit value is a first value in the first bitmap belongs to the second resource. For example, in the first bitmap, "1" indicates that a symbol corresponding to the bit is a symbol of the second resource, and "0" indicates that a symbol corresponding to the bit is not a symbol of the second resource. For example, the first bitmap indicates a position of the second resource in 14 symbols in one slot by using {0, 0, 1, 1, 1, 1, 1, 1, 1, 1, 1, 1, 0, 0}, and the time domain position of the second resource is 10 symbols in the middle of the slot, namely, 10 symbols from a 3^{rd} symbol to a 12^{th} symbol.

Implementation 3: The second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by a DMRS and/or UCI carried in the first signal and that is in the slot. For example, the DMRS in the first signal occupies a 3^{rd} symbol and a 4^{th} symbol in one slot, and the second bitmap indicates, by using {0, 0, 1, 1, 1, 1, 1, 1, 1, 1, 0, 0}, the time domain position of the second resource in the slot is eight symbols from a 5^{th} symbol to a 12^{th} symbol in the slot. Because the 3^{rd} symbol and the 4^{th} symbol are occupied by the DMRS, a 3^{rd} bit in the second bitmap indicates whether the 5^{th} symbol in the slot belongs to the second resource; a 4^{th} bit in the second bitmap indicates whether the 6^{th} symbol in the slot belongs to the second resource; and so on. In this way, only 12 bits are required, so that the time domain position of the second resource can be indicated, to reduce signaling overheads.

In a possible implementation, the time domain position of the second resource may be periodic, semi-persistent, or aperiodic.

In a possible implementation, the first signal is a physical uplink shared channel (physical uplink shared channel, PUSCH). In a possible implementation, the first signaling is downlink control information (downlink control information, DCI) or RRC for scheduling the PUSCH.

S620: The terminal device sends the first signal on a third resource.

Correspondingly, the network device receives the first signal on the third resource.

The third resource is determined based on the first resource and the second resource.

In a possible implementation, the second resource does not overlap with a fourth resource in time domain, and the fourth resource is a resource that carries at least one of a demodulation reference signal (demodulation reference signal, DMRS) in the first signal or uplink control information (uplink control information, UCI) in the first signal.

In a manner of a protocol predefinition or configuration by the network device, the second resource is made not to overlap with important information such as the DMRS or the UCI in the first signal in time domain, to avoid a conflict between CLI measurement and the important information in the first signal.

In a possible implementation, when the second resource does not overlap with the fourth resource in time domain, the third resource is a resource other than the second resource in the first resource. In a possible implementation, the network device performs CLI measurement on the second resource. If the important information such as the DMRS or the UCI in the first signal does not overlap, in time domain, with the second resource used for CLI measurement, the first signal may be sent on the resource other than the second resource in the first resource. In other words, the terminal device does not send the uplink signal on the second resource. In this way, it is ensured that the second resource is used for CLI measurement, and the important information in the first signal can also be normally sent. In addition, another part in the first signal can also be sent on a remaining resource as much as possible.

In another possible implementation, the second resource overlaps with a fourth resource in time domain. In this case, there are a plurality of possible implementations of the third resource.

Implementation 1: The third resource is the first resource. Correspondingly, the network device does not perform CLI measurement on the second resource. If the important information such as the DMRS or the UCI in the first signal overlaps, in time domain, with the second resource used for CLI measurement, to ensure normal sending of the important information in the first signal, the terminal device ignores all second resources, and normally sends the first signal on the first resource. Correspondingly, the network device also ignores the second resource, and does not perform CLI measurement on the second resource. In this way, the important information in the first signal can be normally sent, and the network device does not perform CLI measurement on the second resource, to avoid inaccurate CLI measurement caused by generation of interference to CLI measurement on a resource that overlaps with the first resource in time domain during sending of the first signal.

Implementation 2: The third resource is a resource other than a fifth resource in the first resource, and the fifth resource is a resource other than the fourth resource in the second resource. Correspondingly, the network device performs CLI measurement on the resource other than the fourth resource in the second resource. In other words, the network device does not perform CLI measurement on the fourth resource. If the important information such as the DMRS or the UCI in the first signal overlaps, in time domain, with the second resource used for CLI measurement, to ensure normal sending of the important information in the first signal and effective utilization of the second resource, the terminal device ignores a part of the second resource, and sends the first signal on a part of the first resource. Correspondingly, the network device also ignores the part of the second resource, and performs CLI measurement on a remaining part. In this way, the important information in the first signal can be normally sent, and CLI measurement on the part of the second resource is ensured.

In a possible implementation, a transmit power spectral density of the first signal on a symbol in which the first resource overlaps with the second resource is N times a transmit power spectral density of the first signal on a symbol in which the first resource does not overlap with the second resource. For example, if the second resource has eight REs in one RB, a transmit power spectral density of the first signal on a symbol in which the first resource overlaps with the second resource is three times a transmit power spectral density of the first signal on a symbol in which the first resource does not overlap with the second resource. In this case, in 12 REs in one RB, one-third of the REs are not used for CLI measurement. For another example, if a frequency domain position of the second resource in one RB is a resource element RE with an index of 2n+k, a transmit power spectral density of the first signal on a symbol in which the first resource overlaps with the second resource is twice a transmit power spectral density of the first signal on a symbol in which the first resource does not overlap with the second resource. In a possible implementation, the transmit power spectral density of the first signal on the symbol in which the first resource does not overlap with the second resource is indicated by the first signaling. According to the foregoing solution, when a part of frequency domain resources are not used for transmission, power of the terminal device is fully used for transmission, to improve uplink coverage performance of the cell edge terminal device.

There are a plurality of possible implementations for sending the first signal.

Implementation 1: The first signal is sent on the third resource in a rate matching manner. In a possible implementation, a total quantity of encoded bits transmitted on a transport block that corresponds to the first signal is determined based on the third resource. For example, G is first determined based on the third resource, and then rate matching is performed based on a value of G. Later, a bit sequence that is output through the rate matching is mapped to the third resource. G indicates a total quantity of encoded bits that can be used for transport block transmission. For example, G=N_{RE,3}×Qₘ×N_{L}, where N_{RE,3} indicates a total quantity of REs that are included in the third resource, Qₘ indicates a modulation order of the first signal, and N_{L} indicates a quantity of layers of the first signal.

Implementation 2: The first signal is sent on the third resource in a puncturing manner. For example, G is first determined based on the first resource, and then rate matching is performed based on a value of G. Later, a bit sequence that is output through the rate matching is mapped to the second resource, and finally, only a first signal mapped to the third resource is sent. G indicates a total quantity of encoded bits that can be used for transport block transmission. For example, G=N_{RE,2}×Qₘ×N_{L}, where N_{RE,2} indicates a total quantity of REs that are included in the second resource, Qₘ indicates a modulation order of the first signal, and N_{L} indicates a quantity of layers of the first signal.

In the foregoing solution, a CLI measurement resource between the network devices is of a "comb" structure in frequency domain, so that a single-carrier characteristic of a DFT-S-OFDM waveform is ensured while CLI measurement is performed between the network devices. In this way, a terminal device that performs transmission by using the DFT-S-OFDM waveform can still obtain good communication quality when the network device performs CLI measurement. In addition, in the foregoing solution, impact of uplink transmission by the terminal device on the CLI measurement is further reduced, to ensure full utilization of the resource for uplink transmission and the CLI measurement resource as much as possible, and improve communication efficiency.

Embodiments of the present invention may be used independently, or may be used in combination. Different steps in embodiments may also be used independently, or may be used in combination. Similar steps exist in different embodiments, and descriptions thereof may be mutually cited and referenced.

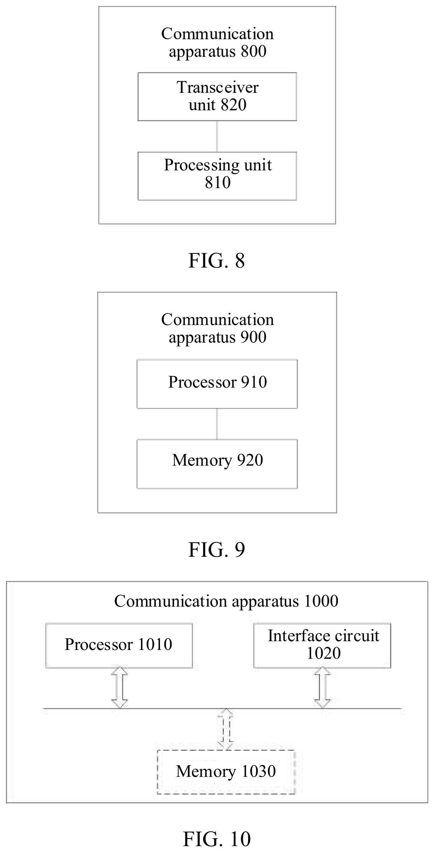

Corresponding to the foregoing method, an embodiment of this application provides a communication device. FIG. 8 to FIG. 10 are diagrams of structures of possible communication apparatuses according to embodiments of this application. These communication apparatuses may be configured to implement functions of the terminal device or the network device in the foregoing method embodiment, and therefore can also achieve beneficial effects of the foregoing method embodiment. In embodiments of this application, the communication device may be the terminal device 101 shown in FIG. 1, the network device 102 shown in FIG. 1, or a module (for example, a chip) used in the terminal device or the network device.

As shown in FIG. 8, the communication apparatus 800 includes a processing unit 810 and a transceiver unit 820. The communication apparatus 800 is configured to implement functions of the terminal device or the network device in the method embodiment shown in FIG. 6.

When the communication apparatus 800 is configured to implement the functions of the terminal device in the method embodiment shown in FIG. 6, the transceiver unit 820 is configured to receive first signaling and second signaling, where the first signaling indicates to send a first signal on a first resource, the second signaling indicates a second resource that is not used for uplink transmission, the second resource overlaps with the first resource in time domain, the second resource includes a plurality of resource elements REs in one resource block RB, and the plurality of REs are resource elements REs with indexes of nN+k, where n is an integer greater than or equal to 0 and less than or equal to 12/N-1, k indicates N-1 different integers from 0 to N-1, and N is a positive integer; and the transceiver unit 820 is further configured to send the first signal on a third resource, where the third resource is determined based on the first resource and the second resource.

In a possible design, the processing unit 810 is configured to determine the third resource based on the first resource and the second resource.

In a possible design, the second resource does not overlap with a fourth resource in time domain, and the fourth resource is a resource that carries at least one of a demodulation reference signal DMRS in the first signal or uplink control information UCI in the first signal.

In a possible design, the third resource is a resource other than the second resource in the first resource.

In a possible design, the second resource overlaps with a fourth resource in time domain, and the fourth resource is a resource that carries at least one of a DMRS in the first signal or UCI in the first signal.

In a possible design, the third resource is the first resource; or the third resource is a resource other than a fifth resource in the first resource, and the fifth resource is a resource other than the fourth resource in the second resource.

In a possible design, N is 2, 3, 4, or 6.

In a possible design, k and/or N are/is indicated by the second signaling or predefined in a protocol.

In a possible design, a transmit power spectral density of the first signal on a symbol in which the first resource overlaps with the second resource is N times a transmit power spectral density of the first signal on a symbol in which the first resource does not overlap with the second resource.

In a possible design, the second signaling indicates a start symbol index and a length that are of the second resource in one slot; the second signaling includes a first bitmap, a bit included in the first bitmap is in one-to-one correspondence with a symbol in a slot, and a symbol corresponding to a bit whose bit value is a first value in the first bitmap belongs to the second resource; or the second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

In a possible design, the transceiver unit 820 is configured to receive first signaling and second signaling, where the first signaling indicates to send a first signal on a first resource, the second signaling indicates a second resource that is not used for uplink transmission, the second resource overlaps with the first resource in time domain, and a frequency domain position of the second resource in one resource block RB is a resource element RE with an index of an odd number or an even number, where n is an integer greater than or equal to 0 and less than or equal to 12/N-1, k is an integer from 0 to N-1, and N is a positive integer; and the transceiver unit 820 is further configured to send the first signal on a third resource, where the third resource is determined based on the first resource and the second resource.

When the communication apparatus 800 is configured to implement the functions of the network device in the method embodiment shown in FIG. 6, the transceiver unit 820 is configured to send first signaling and second signaling to a terminal device, where the first signaling indicates the terminal device to send a first signal on a first resource, the second signaling indicates a second resource that is not used by the terminal device for uplink transmission, the second resource overlaps with the first resource in time domain, the second resource includes a plurality of resource elements REs in one RB, and the plurality of REs are REs with indexes of nN+k, where n is an integer greater than or equal to 0 and less than or equal to 12/N-1, k indicates N-1 different integers from 0 to N-1, and N is a positive integer; and the transceiver unit 820 is further configured to receive the first signal on a third resource, where the third resource is determined based on the first resource and the second resource.

In a possible design, the processing unit 810 is configured to determine the third resource based on the first resource and the second resource.

In a possible design, the processing unit 810 is further configured to perform cross-link interference CLI measurement on the second resource, where the second resource does not overlap with a fourth resource in time domain, and the fourth resource is a resource that carries at least one of a DMRS in the first signal or UCI in the first signal.

In a possible design, the third resource is a resource other than the second resource in the first resource.

In a possible design, the second resource overlaps with a fourth resource in time domain, and the fourth resource is a resource that carries at least one of a DMRS in the first signal or UCI in the first signal.

In a possible design, the processing unit 810 is further configured to skip performing CLI measurement on the second resource, where the third resource is the first resource; or the processing unit 810 is further configured to perform CLI measurement on a resource other than the fourth resource in the second resource, where the third resource is a resource other than a fifth resource in the first resource, and the fifth resource is the resource other than the fourth resource in the second resource.

In a possible design, N is 2, 3, 4, or 6.

In a possible design, k and/or N are/is indicated by the second signaling or predefined in a protocol.

In a possible design, a transmit power spectral density of the first signal on a symbol in which the first resource overlaps with the second resource is N times a transmit power spectral density of the first signal on a symbol in which the first resource does not overlap with the second resource.

In a possible design, the second signaling indicates a start symbol index and a length that are of the second resource in one slot; the second signaling includes a first bitmap, a bit included in the first bitmap is in one-to-one correspondence with a symbol in a slot, and a symbol corresponding to a bit whose bit value is a first value in the first bitmap belongs to the second resource; or the second signaling includes a second bitmap, a bit included in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

In a possible design, the transceiver unit 820 is configured to send first signaling and second signaling to a terminal device, where the first signaling indicates the terminal device to send a first signal on a first resource, the second signaling indicates a second resource that is not used by the terminal device for uplink transmission, the second resource overlaps with the first resource in time domain, and a frequency domain position of the second resource in one RB is an RE with an index of an odd number or an even number, where n is an integer greater than or equal to 0 and less than or equal to 12/N-1, k is an integer from 0 to N-1, and N is a positive integer; and the transceiver unit 820 is further configured to receive the first signal on a third resource, where the third resource is determined based on the first resource and the second resource.

An embodiment of this application provides a communication apparatus 900. FIG. 9 is a block diagram of another communication apparatus according to an embodiment of this application. The communication apparatus 900 includes a processor 910. The processor 910 is coupled to at least one memory 920. The processor 910 is configured to read a computer program stored in the at least one memory 920, to perform the method in any possible implementation in embodiments of this application.

An embodiment of this application further provides a communication apparatus 1000. As shown in FIG. 10, the communication apparatus 1000 includes a processor 1010 and an interface circuit 1020. The processor 1010 and the interface circuit 1020 are coupled to each other. It may be understood that, the interface circuit 1020 may be a transceiver or an input/output interface. Optionally, the communication apparatus 1000 may alternatively include a memory 1030 configured to store instructions executed by the processor 1010, store input data required by the processor 1010 to run the instructions, or store data generated after the processor 1010 runs the instructions.

When the communication apparatus 1000 is configured to implement the method shown in FIG. 6, the processor 1010 is configured to implement functions of the foregoing processing unit 810, and the interface circuit 1020 is configured to implement functions of the foregoing transceiver unit 820.

When the communication apparatus is a chip used in a terminal device, the chip in the terminal device implements functions of the terminal device in the foregoing method embodiment. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements functions of the network device in the foregoing method embodiment. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

The processor in embodiments of this application may be an integrated circuit chip, and has a signal processing capability. In an implementation process, steps in the foregoing method embodiment may be completed by using an integrated logic circuit of hardware in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the method, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps of the foregoing method in combination with hardware of the processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

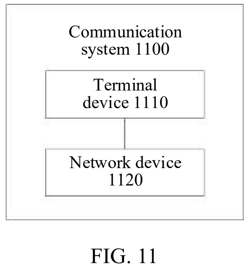

An embodiment of this application provides a communication system 1100, including a terminal device 1110 and a network device 1120 in the communication method provided in embodiments of this application. FIG. 11 is a block diagram of a communication system 1100 according to an embodiment of this application.

Method steps in embodiments of this application may be implemented in a hardware manner, or may be implemented by a processor by executing software instructions. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in a network device or a terminal device as discrete components.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer programs or instructions. When the computer programs or the instructions are loaded and executed on a computer, all or a part of procedures or functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, such as a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

It may be understood that, in this application, "when", "provided", and "if" all mean that an apparatus performs corresponding processing in an objective case and are not intended to limit time, and do not mean that the apparatus is required to have a determining action during implementation, and do not mean that there is another limitation.

A person skilled in the art may understand that, various numbers such as first and second in this application are merely used for differentiation for ease of description, but are not used for limiting the scope of embodiments of this application. A specific value of a number (which may also be referred to as an index), a specific value of a quantity, and a position in this application are merely used as examples, but are not unique representation forms, and are not used for limiting the scope of embodiments of this application. Various numbers such as first and second in this application are merely used for differentiation for ease of description, but are not used for limiting the scope of embodiments of this application.

In addition, the term "and/or" in this application merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects. The term "at least one" in this application may indicate "one" and "two or more". For example, at least one of A, B, and C may indicate the following seven cases: Only A exists, only B exists, only C exists, both A and B exist, both A and C exist, both C and B exist, and A, B, and C exist.

It may be clearly understood by a person skilled in the art that, for the purpose of convenient and brief description, for a specific working process of the foregoing systems, apparatuses, and units, refer to a corresponding process in the foregoing method embodiment. Details are not described herein again.

In several embodiments provided in this application, it should be understood that, the disclosed systems, apparatuses, and method may be implemented in other manners. For example, the apparatus embodiments described above are merely an example. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or the units may be implemented in electronic, mechanical, or other forms.

Units described as separate components may or may not be physically separate, and components displayed as units may or may not be physical units, to be specific, may be located in one place, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

## Claims

1. A communication method, comprising:
receiving first signaling and second signaling, wherein the first signaling indicates to send a first signal on a first resource, the second signaling indicates a second resource that is not used for uplink transmission, the second resource overlaps with the first resource in time domain, the second resource comprises a plurality of resource elements REs in one resource block RB, and the plurality of REs are REs with indexes of nN+k, wherein n is an integer greater than or equal to 0 and less than or equal to 12/N-1, k indicates N-1 different integers from 0 to N-1, and N is a positive integer; and
sending the first signal on a third resource, wherein the third resource is determined based on the first resource and the second resource.

2. The method according to claim 1, wherein
the second resource does not overlap with a fourth resource in time domain, and the fourth resource is a resource that carries at least one of a demodulation reference signal DMRS in the first signal or uplink control information UCI in the first signal.

3. The method according to claim 1 or 2, wherein
the third resource is a resource other than the second resource in the first resource.

4. The method according to claim 1, wherein
the second resource overlaps with a fourth resource in time domain, and the fourth resource is a resource that carries at least one of a DMRS in the first signal or UCI in the first signal.

5. The method according to claim 1 or 4, wherein
the third resource is the first resource; or
the third resource is a resource other than a fifth resource in the first resource, and the fifth resource is a resource other than the fourth resource in the second resource.

6. The method according to any one of claims 1 to 5, wherein
N is 2, 3, 4, or 6.

7. The method according to any one of claims 1 to 6, wherein
k and/or N are/is indicated by the second signaling or predefined in a protocol.

8. The method according to any one of claims 1 to 7, wherein
a transmit power spectral density of the first signal on a symbol in which the first resource overlaps with the second resource is N times a transmit power spectral density of the first signal on a symbol in which the first resource does not overlap with the second resource.

9. The method according to any one of claims 1 to 8, wherein
the second signaling indicates a start symbol index and a length that are of the second resource in one slot;
the second signaling comprises a first bitmap, a bit comprised in the first bitmap is in one-to-one correspondence with a symbol in a slot, and a symbol corresponding to a bit whose bit value is a first value in the first bitmap belongs to the second resource; or
the second signaling comprises a second bitmap, a bit comprised in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

10. A communication method, comprising:
sending first signaling and second signaling to a terminal device, wherein the first signaling indicates the terminal device to send a first signal on a first resource, the second signaling indicates a second resource that is not used by the terminal device for uplink transmission, the second resource overlaps with the first resource in time domain, the second resource comprises a plurality of resource elements REs in one RB, and the plurality of REs are REs with indexes of nN+k, wherein n is an integer greater than or equal to 0 and less than or equal to 12/N-1, k indicates N-1 different integers from 0 to N-1, and N is a positive integer; and
receiving the first signal on a third resource, wherein the third resource is determined based on the first resource and the second resource.

11. The method according to claim 10, wherein
cross-link interference CLI measurement is performed on the second resource, wherein
the second resource does not overlap with a fourth resource in time domain, and the fourth resource is a resource that carries at least one of a DMRS in the first signal or UCI in the first signal.

12. The method according to claim 10 or 11, wherein
the third resource is a resource other than the second resource in the first resource.

13. The method according to claim 10, wherein
the second resource overlaps with a fourth resource in time domain, and the fourth resource is a resource that carries at least one of a DMRS in the first signal or UCI in the first signal.

14. The method according to claim 10 or 13, wherein
performing CLI measurement is skipped on the second resource, wherein the third resource is the first resource; or
CLI measurement is performed on a resource other than the fourth resource in the second resource, wherein the third resource is a resource other than a fifth resource in the first resource, and the fifth resource is the resource other than the fourth resource in the second resource.

15. The method according to any one of claims 10 to 14, wherein
N is 2, 3, 4, or 6.

16. The method according to any one of claims 10 to 15, wherein
k and/or N are/is indicated by the second signaling or predefined in a protocol.

17. The method according to any one of claims 10 to 16, wherein
a transmit power spectral density of the first signal on a symbol in which the first resource overlaps with the second resource is N times a transmit power spectral density of the first signal on a symbol in which the first resource does not overlap with the second resource.

18. The method according to any one of claims 10 to 17, wherein
the second signaling indicates a start symbol index and a length that are of the second resource in one slot;
the second signaling comprises a first bitmap, a bit comprised in the first bitmap is in one-to-one correspondence with a symbol in a slot, and a symbol corresponding to a bit whose bit value is a first value in the first bitmap belongs to the second resource; or
the second signaling comprises a second bitmap, a bit comprised in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

19. A communication apparatus, comprising:
a transceiver unit, configured to receive first signaling and second signaling, wherein the first signaling indicates to send a first signal on a first resource, the second signaling indicates a second resource that is not used for uplink transmission, the second resource overlaps with the first resource in time domain, the second resource comprises a plurality of resource elements REs in one RB, and the plurality of REs are REs with indexes of nN+k, wherein n is an integer greater than or equal to 0 and less than or equal to 12/N-1, k indicates N-1 different integers from 0 to N-1, and N is a positive integer, wherein
the transceiver unit is further configured to send the first signal on a third resource, wherein the third resource is determined based on the first resource and the second resource.

20. The apparatus according to claim 19, wherein
the second resource does not overlap with a fourth resource in time domain, and the fourth resource is a resource that carries at least one of a DMRS in the first signal or UCI in the first signal.

21. The apparatus according to claim 19 or 20, wherein
the third resource is a resource other than the second resource in the first resource.

22. The apparatus according to claim 19, wherein
the second resource overlaps with a fourth resource in time domain, and the fourth resource is a resource that carries at least one of a DMRS in the first signal or UCI in the first signal.

23. The apparatus according to claim 19 or 22, wherein
the third resource is the first resource; or
the third resource is a resource other than a fifth resource in the first resource, and the fifth resource is a resource other than the fourth resource in the second resource.

24. The apparatus according to any one of claims 19 to 23, wherein
N is 2, 3, 4, or 6.

25. The apparatus according to any one of claims 19 to 24, wherein
k and/or N are/is indicated by the second signaling or predefined in a protocol.

26. The apparatus according to any one of claims 19 to 25, wherein
a transmit power spectral density of the first signal on a symbol in which the first resource overlaps with the second resource is N times a transmit power spectral density of the first signal on a symbol in which the first resource does not overlap with the second resource.

27. The apparatus according to any one of claims 19 to 26, wherein
the second signaling indicates a start symbol index and a length that are of the second resource in one slot;
the second signaling comprises a first bitmap, a bit comprised in the first bitmap is in one-to-one correspondence with a symbol in a slot, and a symbol corresponding to a bit whose bit value is a first value in the first bitmap belongs to the second resource; or
the second signaling comprises a second bitmap, a bit comprised in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

28. A communication apparatus, comprising:
a transceiver unit, configured to send first signaling and second signaling to a terminal device, wherein the first signaling indicates the terminal device to send a first signal on a first resource, the second signaling indicates a second resource that is not used by the terminal device for uplink transmission, the second resource overlaps with the first resource in time domain, the second resource comprises a plurality of resource elements REs in one RB, and the plurality of REs are REs with indexes of nN+k, wherein n is an integer greater than or equal to 0 and less than or equal to 12/N-1, k indicates N-1 different integers from 0 to N-1, and N is a positive integer, wherein
the transceiver unit is further configured to receive the first signal on a third resource, wherein the third resource is determined based on the first resource and the second resource.

29. The apparatus according to claim 28, wherein the apparatus further comprises:
a processing unit, configured to perform cross-link interference CLI measurement on the second resource, wherein
the second resource does not overlap with a fourth resource in time domain, and the fourth resource is a resource that carries at least one of a DMRS in the first signal or UCI in the first signal.

30. The apparatus according to claim 28 or 29, wherein
the third resource is a resource other than the second resource in the first resource.

31. The apparatus according to claim 28, wherein
the second resource overlaps with a fourth resource in time domain, and the fourth resource is a resource that carries at least one of a DMRS in the first signal or UCI in the first signal.

32. The apparatus according to claim 28 or 31, wherein the apparatus further comprises:
a processing unit, configured to skip performing CLI measurement on the second resource, wherein the third resource is the first resource; or
a processing unit, configured to perform CLI measurement on a resource other than the fourth resource in the second resource, wherein the third resource is a resource other than a fifth resource in the first resource, and the fifth resource is the resource other than the fourth resource in the second resource.

33. The apparatus according to any one of claims 28 to 32, wherein
N is 2, 3, 4, or 6.

34. The apparatus according to any one of claims 28 to 33, wherein
k and/or N are/is indicated by the second signaling or predefined in a protocol.

35. The apparatus according to any one of claims 28 to 34, wherein
a transmit power spectral density of the first signal on a symbol in which the first resource overlaps with the second resource is N times a transmit power spectral density of the first signal on a symbol in which the first resource does not overlap with the second resource.

36. The apparatus according to any one of claims 28 to 35, wherein
the second signaling indicates a start symbol index and a length that are of the second resource in one slot;
the second signaling comprises a first bitmap, a bit comprised in the first bitmap is in one-to-one correspondence with a symbol in a slot, and a symbol corresponding to a bit whose bit value is a first value in the first bitmap belongs to the second resource; or
the second signaling comprises a second bitmap, a bit comprised in the second bitmap is in one-to-one correspondence with a symbol other than a first symbol in a slot, a symbol corresponding to a bit whose bit value is a first value in the second bitmap belongs to the second resource, and the first symbol is a symbol that is occupied by the DMRS and/or the UCI carried in the first signal and that is in the slot.

37. A communication apparatus, comprising at least one processor and an interface circuit, wherein the interface circuit is configured to provide an input or an output of instructions and/or data for the at least one processor; and when the at least one processor executes the instructions, the apparatus is enabled to implement the method according to any one of claims 1 to 18.

38. A computer-readable storage medium, comprising instructions, wherein when the instructions are run on a computer, the computer is enabled to perform the method according to any one of claims 1 to 9, or the computer is enabled to perform the method according to any one of claims 10 to 18.

39. A computer program product, comprising instructions, wherein when the instructions are run on a computer, the computer is enabled to perform the method according to any one of claims 1 to 9, or the computer is enabled to perform the method according to any one of claims 10 to 18.

40. A chip, comprising a processor and a communication interface, wherein the processor is configured to read instructions or a computer program, to perform the method according to any one of claims 1 to 9, or enable the computer to perform the method according to any one of claims 10 to 18.

41. A communication system, comprising the communication apparatus according to any one of claims 19 to 27 and the communication apparatus according to any one of claims 28 to 36.
